(19) Europäisches Patentamt / European Patent Office / Office européen des brevets

(11) **EP 2 156 972 A1**

(12) **DEMANDE DE BREVET EUROPEEN**

(43) Date de publication:
**24.02.2010 Bulletin 2010/08**

(51) Int Cl.:
**B60H 1/32** $^{(2006.01)}$

(21) Numéro de dépôt: **09166684.2**

(22) Date de dépôt: **29.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **12.08.2008 FR 0804571**

(71) Demandeur: **Valeo Systèmes Thermiques 78321 Le Mesnil Saint Denis Cedex (FR)**

(72) Inventeurs:
• **Liu, Jin-Ming**
  **78770, Conflans Saint Honorine (FR)**
• **Yahia, Mohamed**
  **75005, Paris (FR)**

(74) Mandataire: **Léveillé, Christophe Valeo Systemes Thermiques Service Propriété Industrielle Branche Thermique Habitacle 8, rue Louis Lormand La Verrière BP 513 78321 Le Mesnil-Saint- Denis Cedex (FR)**

(54) **Procédé et système de contrôle du fonctionnement d'une boucle d'air conditionné**

(57) L'invention concerne un procédé de contrôle du fonctionnement d'une boucle d'air conditionné à bord d'un véhicule motorisé, la boucle d'air conditionné comprenant au moins un compresseur couplé au moteur du véhicule, le couplage du compresseur au moteur du véhicule créant une charge sur le moteur dès lors que le compresseur fonctionne. Selon l'invention, le procédé comprend une étape d'évaluation ($E_3$) de la charge instantanée ($C_{EI}$) appliquée par le compresseur sur le moteur, une étape de calcul ($E_{3'}$, $E_{3''}$) d'un paramètre de consigne ($C_{MA}$, $C_{CI}$) du compresseur en utilisant l'évaluation de la charge instantanée ($C_{EI}$) et une étape de modification ($E_5$, $E_{11}$) du signal de contrôle du compresseur ($PWM_{comp}(k)$) en comparant le couple effectif du compresseur avec le paramètre de consigne ($C_{MA}$, $C_{CI}$).

Figure 2a

EP 2 156 972 A1

Figure 2b

**Description**

La présente invention se rapporte au domaine général des procédés et des systèmes pour le contrôle du fonctionnement d'une boucle d'air conditionné à bord d'un véhicule motorisé. De telles boucles d'air conditionné comportent un compresseur couplé au moteur, de préférence un moteur thermique, du véhicule automobile.

Dans les systèmes connus, quand la boucle d'air conditionné est en marche, le compresseur induit une consommation additionnelle d'énergie du moteur du véhicule.

L'invention concerne les véhicules à bord desquels une unité de contrôle du fonctionnement du moteur est installée. En fonction de la puissance développée par le moteur du véhicule, l'unité de contrôle du moteur fournit des informations permettant de réguler la boucle d'air conditionné selon une stratégie de gestion.

Les stratégies de gestion connues consistent à réaliser des actions lors de l'occurrence de conditions particulières. Notamment, quand le couple exercé par le compresseur sur le moteur du véhicule est trop important, l'unité de contrôle du moteur déleste le compresseur. De même, lorsqu'une accélération trop forte du véhicule est observée, le compresseur est également délesté. Il est encore avantageusement arrêté et démarré en fonction du statut de la boite de vitesse du véhicule lorsque celle-ci est automatique.

On remarque que les systèmes connus ne prennent pas en compte le couple de fonctionnement du compresseur. Avec les systèmes connus, le compresseur peut être arrêté même si le couple de fonctionnement du compresseur n'est pas important. Cela implique que le compresseur peut être arrêté alors même que son fonctionnement pourrait être maintenu à bas régime.

Les interruptions très fréquentes de fonctionnement peuvent nuire à la durabilité du compresseur. De plus, de telles interruptions sont susceptibles d'être ressenti à l'intérieur de l'habitacle du véhicule et, de manière plus globale, peuvent nuire au confort des passagers du véhicule par la perception de variations de températures.

La présente invention a donc pour but de palier de tels inconvénients, en proposant un procédé de contrôle du fonctionnement d'une boucle d'air conditionné à bord d'un véhicule motorisé, la boucle comprenant un compresseur couplé au moteur du véhicule, le couplage du compresseur au moteur du véhicule créant une charge sur le moteur dès lors que le compresseur fonctionne. Le procédé comprend une étape d'évaluation de la charge instantanée appliquée par le compresseur sur le moteur, une étape de calcul d'un paramètre de consigne du compresseur et une étape de modification du signal de contrôle du compresseur en comparant le couple effectif du compresseur et le paramètre de consigne.

Avec un tel procédé, les modifications de fonctionnement du compresseur, tenant compte de la charge effective appliquée par le compresseur sur le moteur, peuvent éviter d'arrêter le compresseur lorsque celui-ci fonctionne selon un régime appliquant une charge sur le moteur tout à fait compatible avec le fonctionnement du moteur.

Dans un mode de réalisation avantageux de l'invention, le moteur étant contrôlé par une unité de contrôle du moteur et la boucle d'air conditionné par une unité de contrôle de l'air conditionné, l'unité de contrôle de l'air conditionné est apte à envoyer vers l'unité de contrôle du moteur des données relatives à la charge appliquée par le compresseur sur le moteur.

Dans un tel mode de réalisation, l'unité de contrôle du moteur tient compte des données relatives à la charge appliquée par le compresseur pour calculer le paramètre de consigne. Les données relatives à la charge appliquée par le compresseur comprennent, par exemple, une estimation du couple du compresseur appliqué sur le moteur.

En particulier, l'unité de contrôle du moteur est apte à estimer un couple du compresseur appliqué au moteur à partir des données relatives à la charge, à calculer le paramètre de consigne et à envoyer le paramètre de consigne vers l'unité de contrôle de l'air conditionné.

Cela permet de donner une consigne de la charge de fonctionnement à l'unité de contrôle de l'air conditionné. Une telle consigne pourra notamment être un couple. Le paramètre de consigne est une valeur maximale admissible par le moteur ou une valeur cible.

L'unité de contrôle de l'air conditionné peut alors modifier librement le signal de contrôle du compresseur, de manière à ce que le couple exercé par le compresseur sur le moteur soit toujours en dessous du couple maximal admissible donné par l'unité de contrôle du moteur ou autour d'une valeur cible adaptée au fonctionnement du moteur.

Dans les différentes réalisations, le paramètre est choisi parmi un couple, une température d'évaporation, la pression d'aspiration du compresseur, la pression de refoulement du compresseur, le rapport de pression entre les pressions d'aspiration et de refoulement du compresseur, la différence de pression entre les pressions d'aspiration et de refoulement du compresseur.

L'invention concerne également une unité de contrôle du fonctionnement d'une boucle d'air conditionné à bord d'un véhicule motorisé ou unité de contrôle du fonctionnement d'un moteur à bord d'un véhicule motorisé, la boucle d'air conditionné comprenant un compresseur couplé au moteur du véhicule, le couplage du compresseur au moteur du véhicule créant une charge sur ce moteur dès lors que le compresseur fonctionne. L'unité de contrôle est apte à recevoir des données relatives à la charge appliquée par le compresseur sur le moteur ou à envoyer des données relatives au moins au paramètre de consigne calculé.

L'ensemble constitué par l'unité de contrôle du fonctionnement de la boucle d'air conditionné et l'unité de contrôle du fonctionnement du moteur, les deux unités de contrôle étant reliées par un réseau de communication permettant l'échange bidirectionnel de messages entre les deux unités, constituent un système de contrôle du fonctionnement d'une boucle d'air conditionné selon l'invention.

L'invention vise aussi un support d'informations lisible par une unité de contrôle, et comportant des instructions d'un programme d'ordinateur tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, un support comprenant de la mémoire Flash, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 montre de manière schématique le principe de fonctionnement entre l'unité de contrôle de la boucle d'air conditionné et l'unité de contrôle du moteur selon la présente invention ;
- les figures 2a et 2b sont des organigrammes détaillant le procédé de contrôle du couple du compresseur selon l'invention en fonction de l'estimation du couple réel exercé par le compresseur sur le moteur ;
- les figures 3a et 3b sont des organigrammes précisant les étapes $E_5$ et $E_{11}$ du procédé selon l'invention selon deux réalisations particulières ;
- les figures 4a et 4b sont des organigrammes détaillant un mode de réalisation particulier du procédé selon l'invention ;
- les figures 5a et 5b sont des organigrammes détaillant un autre mode de réalisation particulier du procédé selon l'invention, et
- les figures 6a et 6b sont des représentations graphiques montrant l'évolution du couple estimé et de la température d'évaporation en fonction du signal de contrôle du compresseur.

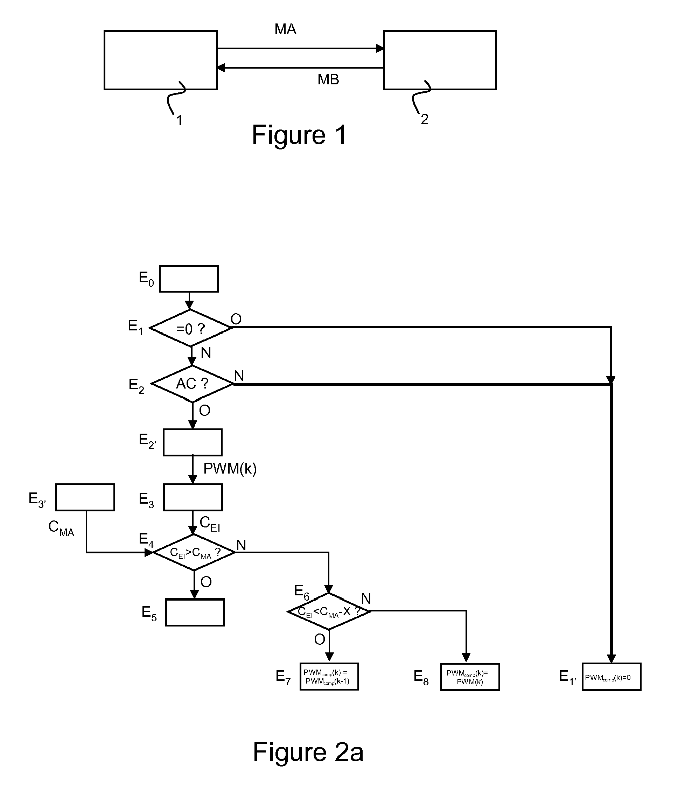

La figure 1 est une représentation schématique d'un principe de fonctionnement entre l'unité de contrôle de la boucle d'air conditionné et l'unité de contrôle du moteur selon la présente invention.

De façon traditionnelle, la boucle d'air conditionné comporte un circuit de climatisation pour un fluide frigorigène. Le circuit de climatisation comprend dans le sens de circulation du fluide frigorigène un compresseur, un condenseur ou refroidisseur de gaz, un organe de détente, un évaporateur et un accumulateur. Optionnellement, le circuit de climatisation peut également intégrer un échangeur de chaleur interne,

Le circuit de climatisation comprend une partie haute pression située entre la sortie du compresseur et l'entrée de l'organe de détente. Le circuit de climatisation comprend également une partie basse pression située entre la sortie de l'organe de détente et l'entrée du compresseur.

Le condenseur est traversé par un flux d'air mis en mouvement par un groupe moto-ventilateur, disposé de façon préférentielle dans le compartiment moteur du véhicule et plus particulièrement en face avant de celui-ci. L'évaporateur est traversé par un flux d'air destiné à être refroidi et déshumidifié avant d'être distribué dans l'habitacle du véhicule. Une sonde, dite sonde évaporateur, est disposée en aval de l'évaporateur selon le sens de circulation du flux d'air afin de fournir une donnée propre à une température d'air soufflé.

Le système selon la présente invention comprend une unité de contrôle du fonctionnement d'une boucle d'air conditionné, dite unité de contrôle de l'air conditionné 1, et une unité de contrôle du fonctionnement d'un moteur, dite unité de contrôle du moteur 2. Les unités de contrôle de l'air conditionné 1 et de contrôle du moteur 2 sont en liaison par un réseau de communication bidirectionnel qui leur permet d'échanger des messages MA et MB.

Le message MA circule de l'unité de contrôle de l'air conditionné 1 vers l'unité de contrôle du moteur 2 et comprend au minimum une donnée sur la charge appliquée par le compresseur sur le moteur. Dans l'exemple présenté dans la description de l'invention, cette donnée sera une estimation du couple actuel du compresseur.

Le message MB circule de l'unité de contrôle du moteur 2 vers l'unité de contrôle de l'air conditionné 1. Il contient au minimum un paramètre de consigne propre au fonctionnement du compresseur. Le paramètre de consigne sera avantageusement un couple de consigne. Cela pourra alors être un couple du compresseur maximal admissible ou un couple cible pour le compresseur.

Dans ce cas, le message MB comprendra, préférentiellement, une donnée, en particulier sur un bit, stipulant que le message MB comprend, soit, un couple maximal, soit, un couple cible.

Le couple maximal ou le couple cible sont déterminés avantageusement au sein de l'unité de contrôle du moteur 1 en fonction de la charge exercée sur le moteur et en fonction des paramètres de fonctionnement du moteur, en particulier la température du fluide de refroidissement du moteur et la température de l'huile du moteur.

En fonction du message MB reçu par l'unité de contrôle de l'air conditionné 1, l'unité de contrôle de l'air conditionné 1 ajuste le fonctionnement du compresseur de manière à ce que le couple du compresseur soit en dessous du couple maximal envoyé par l'unité de contrôle du moteur 2 ou dans un intervalle restreint autour du couple cible envoyé par l'unité de contrôle du moteur 2. Les informations communiquées entre les unités de contrôle de l'air conditionné 1 et de contrôle du moteur 2 ne sont pas limitées. Selon les besoins, d'autres informations peuvent être transmises et ajoutées aux messages MA et MB.

Dans une réalisation pratique, le système prend en compte les paramètres de fonctionnement du groupe moto-ventilateur, du condenseur, ...

Pour cela, le message MA comprendra avantageusement un signal de contrôle du groupe moto-ventilateur et le message MB comprendra un signal de contrôle du groupe moto-ventilateur appliqué réellement par l'unité de contrôle du moteur 2. Avantageusement, le signal de contrôle du groupe moto-ventilateur envoyé dans le message MA permet à l'unité de contrôle de l'air conditionné 1 d'augmenter le contrôle du groupe moto-ventilateur avant de réduire la capacité du compresseur. Ceci permet donc d'éviter la création d'une situation d'inconfort pour les occupants se trouvant dans l'habitacle du véhicule.

Dans le cas où la tension du groupe moto-ventilateur est en dessous du tension maximal, le contrôle de l'air conditionné est d'abord réalisé en modifiant le signal de contrôle du groupe moto-ventilateur et ensuite par modification du régime de fonctionnement du compresseur. Cela nécessite alors que le message MB contienne un paramètre de tension du fonctionnement du groupe moto-ventilateur et un paramètre du couple de contrôle du fonctionnement du compresseur.

On remarque ici que le message MA contiendra aussi avantageusement une information sur le statut du compresseur, c'est-à-dire à savoir s'il est démarré ou arrêté. Cette information sera avantageusement utilisée dans la stratégie de gestion de la boucle d'air conditionné par l'unité de contrôle du moteur 2.

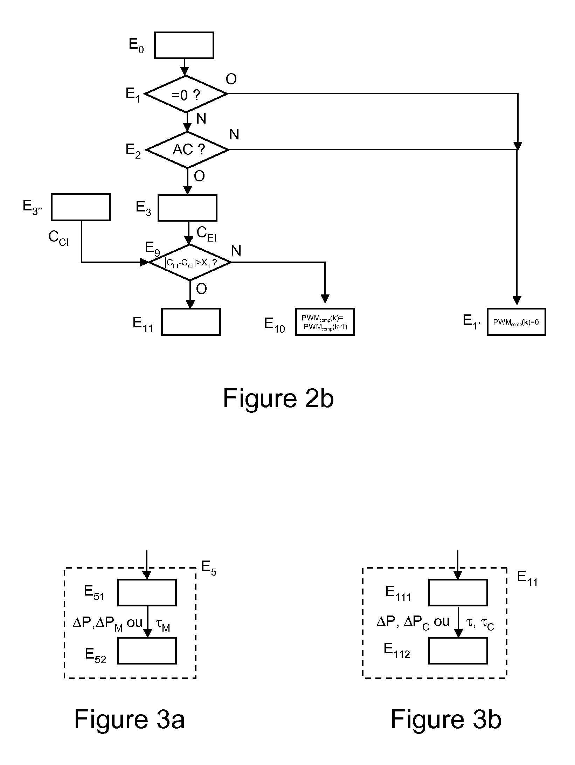

Les figures 2a et 2b représentent des organigrammes illustrant un cycle de fonctionnement de l'unité de contrôle de l'air conditionné 1 dans un premier mode de réalisation.

Dans une première étape $E_0$, un certain nombre de mesures de données est effectué de manière routinière.

Pour la description des figures, on considère que l'unité de contrôle de l'air conditionné 1 dispose de registres recevant les derniers paramètres de consigne envoyés par l'unité de contrôle du moteur 2, notamment des valeurs de couple du compresseur, et, préférentiellement, un registre stipulant le type du paramètre de consigne à considérer, en particulier, soit un couple maximal admissible $C_{MA}$ stocké dans un registre correspondant, soit un couple cible $C_{CI}$ stocké dans un registre correspondant.

Selon la présente invention, on envisage, selon la figure 2a, un cycle de fonctionnement de l'unité de contrôle de l'air conditionné 1 dans lequel le type du paramètre de consigne à considérer est le couple maximal admissible $C_{MA}$ et, selon la figure 2b, un cycle de fonctionnement de l'unité de contrôle de l'air conditionné 1 dans lequel le type du paramètre de consigne à considérer est le couple cible $C_{CI}$.

A la suite de l'étape $E_0$, dans une étape $E_1$, commune aux deux cycles de fonctionnement, on considère la valeur du registre signalant le type de couple en cours et on vérifie si le couple maximal admissible $C_{MA}$ ou le couple cible $C_{CI}$ à prendre en compte en fonction de la valeur du registre est égal à zéro. Dans l'affirmative, le compresseur est arrêté dans une étape $E_{1'}$.

Dans la négative de l'étape $E_1$, dans une étape $E_2$ commune également aux deux cycles de fonctionnement, on vérifie si la boucle d'air conditionné est en marche. Dans la négative, le compresseur est mis ou conservé en position 'arrêt' dans l'étape $E_{1'}$.

Dans l'affirmative de l'étape $E_2$, si la boucle d'air conditionné est en marche, dans une étape $E_3$ commune également aux deux cycles de fonctionnement, un couple du compresseur instantané $C_{EI}$ est alors estimé.

Un couple de consigne est stocké dans au moins un registre, soit un couple maximal admissible $C_{MA}$ calculé dans une étape $E_{3'}$, soit un couple cible $C_{CI}$ calculé dans une étape $E_{3''}$. Un registre, notamment sur un bit, stocke une valeur signalant le type de paramètre de consigne en cours :

- soit un paramètre maximal, ou minimal, admissible,
- soit un paramètre cible.

Lorsque le type de couple est un couple maximal autorisé $C_{MA}$, le contrôle signal du compresseur est déterminé dans une étape $E_{2'}$, noté PWM(k), réalisant un contrôle PID (boucle proportionnelle intégrale dérivée) prenant en compte la température de l'air soufflé. Toutefois, pour respecter la limite du couple maximal admissible, le couple exercé sur le moteur est estimé à l'étape $E_3$.

La figure 2a présente le cycle de fonctionnement de l'unité de contrôle de l'air conditionné 1 dans lequel le type du paramètre de consigne à considérer est le couple maximal admissible $C_{MA}$. Selon cet exemple de réalisation,

une étape E$_4$ permet la comparaison entre le couple estimé instantané C$_{EI}$ et le couple maximal admissible C$_{MA}$.

Si le couple estimé C$_{EI}$ est supérieur à la valeur du couple maximal admissible C$_{MA}$, alors, dans une étape E$_5$, la capacité de fonctionnement du compresseur est réduite en fonction de la différence entre le couple maximal admissible et le couple estimé instantané.

En particulier, la décroissance du signal de contrôle du compresseur pourra être du type :

$$PWM_{comp}(k) = PWM(k) + k*(C_{EI}-C_{MA}).$$

Dans le cas où le couple du compresseur instantané C$_{EI}$ n'est pas supérieur au couple maximal admissible C$_{MA}$, un contrôle additionnel de l'éloignement du couple du compresseur instantané C$_{EI}$ par rapport au couple maximal admissible C$_{MA}$ sera effectué dans une étape E$_6$. On vérifie alors que le couple instantané C$_{EI}$ est inférieur à la valeur C$_{MA}$-X, X étant une valeur prédéterminée.

Dans l'affirmative, l'éloignement est suffisamment important, le signal de contrôle du compresseur PWM$_{comp}$(k) sera maintenu égal au signal de contrôle précédent PWM$_{comp}$(k-1). Dans la négative, le procédé selon l'invention aligne le signal de contrôle du compresseur PWM$_{comp}$(k) sur le signal de contrôle du compresseur réel PWM(k) donné dans l'étape E$_{2'}$, par le contrôle de la température d'air soufflé.

La figure 2b présente le cycle de fonctionnement de l'unité de contrôle de l'air conditionné 1 dans lequel le type du paramètre de consigne à considérer est le couple cible C$_{CI}$. Dans ce cas, une étape E$_9$ succède à l'étape E$_3$. L'étape E$_9$ contrôle la proximité du couple instantanée C$_{EI}$ avec le couple cible C$_{CI}$ en vérifiant que la valeur absolue de la différence entre ces deux couples est supérieure à une valeur X$_1$ prédéterminée.

Dans la négative, lors d'une étape E$_{10}$, la consigne de fonctionnement du compresseur PWM$_{comp}$(k) est maintenue égale à la consigne précédente PWM$_{comp}$(k-1).

Dans l'affirmative, la consigne de fonctionnement du compresseur PWM$_{comp}$p(k) est contrôlé, dans une étape E$_{11}$, par une boucle proportionnelle intégrale dérivée (PID) afin de parvenir à s'approcher du couple cible.

La consigne du contrôle PID est alors de la forme :

$$PWM_{comp}(k) = K_p*\Delta C + \Sigma K_i*\Delta C + K_d*\Delta(\Delta C)/T_s$$

où    K$_p$ est le gain proportionnel,
      K$_i$ est le gain intégral,
      K$_d$ est le gain dérivé,
      $\Delta$C est la différence entre le couple cible C$_{CI}$ et le couple estimé C$_{EI}$ et T$_s$ est le temps d'échantillonnage du contrôle.

Dans la suite, un exemple de calculs permettant l'estimation du couple du compresseur est détaillé.

Le couple instantanée du compresseur s'exprime selon la relation :

$$C_{EI} = 60*P_E/(2*\pi*N_C)$$

où    P$_E$ est la puissance estimée du compresseur et
      N$_C$ est la vitesse du compresseur.

La puissance estimée du compresseur P$_E$ s'exprime selon la relation :

$$P_E = a*W_{is} + b*N_C$$

où    a et b sont des coefficients représentatifs du modèle du compresseur,
et    W$_{is}$ est la puissance isentropique du compresseur.

Or la puissance isentropique du compresseur est définie par la relation :

$$W_{is} = M_E * \Delta H_{is}$$

où     $M_E$ est le débit massique du fluide frigorigène et
$\Delta H_{is}$ est la différence d'enthalpie isentropique du compresseur.

Par ailleurs, un modèle d'estimation du débit massique du fluide frigorigène est donné par la relation :

$$M_E = A * d^2 * R_o * (P_{RCO} - P_{RCI})^{0,5}$$

où     A est un constante,
d est le diamètre équivalent de l'orifice du détendeur en mm,
$R_o$ est la densité du fluide frigorigène,
$P_{RCO}$ est la pression en refoulement du compresseur et
$P_{RCI}$ est la pression en aspiration du compresseur.

La différence d'enthalpie isentropique du compresseur est approchée par :

$$\Delta H_{is} = (R/M) * n * (T_{RCI} + 273,15) * [(P_{RCO}/P_{RCI})^{n-1/n} - 1]/(n-1).$$

où     $T_{RCI}$ est la température d'aspiration du compresseur en degré °C.

Selon le modèle utilisé, on a : R/M=143,5 et n=1,31.
Donc:

$$W_{is} = A * d^2 * R_o * (P_{RCO} - P_{RCI})^{0,5} * [(R/M) * n * (T_{RCI} + 273,15) * [(P_{RCO}/P_{RCI})^{n-1/n} - 1]/(n-1)]$$

ou encore

$$W_{is} = A * d^2 * R_o * P_{RCI}^{0,5} * (P_{RCO}/P_{RCI} - 1)^{0,5} * [(R/M) * n * (T_{RCI} + 273,15) * [(P_{RCO}/P_{RCI})^{n-1/n} - 1]/(n-1)]$$

Dans une première variante, on fait les estimations selon lesquelles la densité du fluide frigorigène est constante et la température d'aspiration du compresseur $T_{RCI}$ (en degré °C) est égale à la température ambiante $T_A$. Alors, la puissance isentropique du compresseur $W_{is}$ est donc fonction de la pression en refoulement du compresseur $P_{RCO}$, de la pression en aspiration du compresseur $P_{RCI}$ et de la température d'aspiration du compresseur $T_{RCI}$. Soit

$$W_{is} = f(P_{RCI}, P_{RCO}/P_{RCI}, T_A) = f(P_{RCI}, \tau, T_A)$$

où     $\tau$ est le rapport des pressions $P_{RCO}/P_{RCI}$,

ou encore

$$W_{is} = f(P_{RCO} - P_{RCI}, \tau, T_A).$$

Dans une seconde variante, on fait les estimations selon lesquelles la densité est fonction de la pression de refoulement du compresseur et la température d'aspiration $T_{RCI}$ du compresseur est donnée par la relation :

$$T_{RCI} = T_{RCO}/(P_{RCO}/P_{RCI})^{n-1/n}$$

où $T_{RCO}$ est la température de détente du compresseur.

On a la puissance isentropique du compresseur $W_{is}$ comme fonction de la pression en refoulement du compresseur $P_{RCO}$, de la pression en aspiration du compresseur $P_{RCI}$ et de la température de refoulement du compresseur $T_{RCI}$.
Soit

$$W_{is} = f(d, P_{RCI}, P_{RCO}/P_{RCI}, T_{RCO}) = f(P_{RCI}, \tau, T_{RCO})$$

ou

$$W_{is} = f(d, P_{RCO}-P_{RCI}, \tau, T_{RCO}).$$

Alors le couple estimé $C_{EI}$ s'exprime selon les fonctions :

$$C_{EI} = f(d, P_{RCI}, \tau, T_{RCO}, N_C) = f(d, P_{RCI}, \tau, T_A, N_C)$$
$$\approx k_1(d, P_{RCI}, T_{RCO}, N_C)*(\tau-1) \approx k_1(d, P_{RCI}, T_A, N_C)*(\tau-1)$$

ou

$$C_{EI} = f(d, P_{RCO}-P_{RCI}, \tau, T_{RCO}, N_C) = f(d, P_{RCO}-P_{RCI}, \tau, T_A, N_C)$$
$$\approx k_2(d, P_{RCI}, T_A, N_C)* (P_{RCO}-P_{RCI}) + k_3.$$

Ainsi, on remarque que le contrôle du rapport des pressions ou de la différence des pressions permet de contrôler le couple du compresseur.
Par ailleurs, en faisant l'hypothèse que, pour une pression constante $P_{RCI}$, le contrôle de la haute pression $P_{RCO}$ revient aussi à contrôler le couple du compresseur.
Ainsi, dans la suite, on va voir comment le couple du compresseur est contrôlé en pratique à partir de ces paramètres de pression.
Les figures 3a et 3b représentent schématiquement les étapes $E_5$ et $E_{11}$ dans deux modes de réalisation où le rapport des pressions ou la différence des pressions est utilisé.
Le couple du compresseur est dépendant du rapport des pressions. La diminution du couple du compresseur peut donc être contrôlé en gérant le rapport des pressions.
Il est donc nécessaire de déterminer un rapport des pressions maximal admissible

$$\tau_M = P_{RCO}/P_{RCI}$$

ou une différence des pressions maximale

$$\Delta P_M = P_{RCO}-P_{RCI}$$

dans une première sous-étape $E_{51}$ puis le signal de contrôle de la boucle PID commandant le compresseur $PWM_{comp}$ (k) est alors diminué, dans une sous-étape $E_{52}$, en utilisant la différence entre le rapport de pression observé $\tau$ et le rapport de pression maximal admissible $\tau_M$ dans une équation de la forme :

$$PWM_{comp}(k)= PWM(k)+k^*(\tau-\tau_M),$$

ou en utilisant la différence entre la différence des pressions observée $\Delta P$ et la différence des pressions maximale admissible $\Delta P_M$ dans une équation de la forme :

$$PWM_{comp}(k)= PWM(k)+k^*(\Delta P-\Delta P_M).$$

D'une manière similaire, l'étape $E_{11}$ est modifiée en contrôlant le compresseur par l'intermédiaire d'un calcul du rapport des pressions $\tau$ actuel et d'un rapport des pressions cible $\tau_C$ ou par l'intermédiaire d'un calcul de la différence des pressions $\Delta P$ actuel et d'une différence des pressions cible $\Delta P_C$, dans une sous-étape $E_{111}$ avant d'utiliser le rapport cible dans la boucle PID en régulant le signal de contrôle du compresseur de la manière suivante :

$$PWM_{comp}(k)= K_p^*\Delta\tau + \Sigma K_i^*\Delta\tau + K_d^*\Delta(\Delta\tau)/T_s$$

en utilisant le rapport des pressions ou

$$PWM_{comp}(k)= K_p^*\Delta(\Delta P) + \Sigma K_i^*\Delta(\Delta P) + K_d^*\Delta(\Delta(\Delta P))/T_s$$

en utilisant les différences de pressions.

Dans d'autres exemples de réalisation de l'invention, le contrôle du compresseur est réalisé en contrôlant soit la pression d'aspiration du compresseur $P_{RCI}$, soit la température d'air soufflé fournie par la sonde de l'évaporateur. Dans le premier cas, il est intéressant que le compresseur soit contrôlé par le contrôle du flux au niveau sa vanne de contrôle.

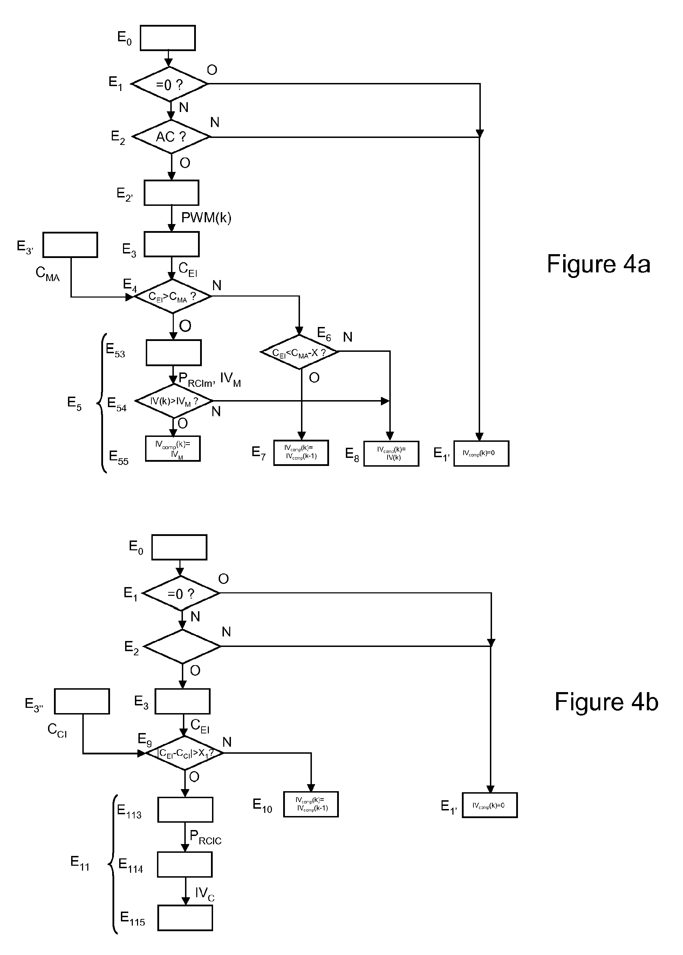

Sur les figures 4a et 4b, l'ensemble du procédé est de nouveau représenté. Sur ces figures, les étapes $E_{1'}$, $E_5$, $E_7$, $E_8$, $E_{10}$ et $E_{11}$ des figures 2a et 2b sont modifiées. Le paramètre sur lequel le système agit n'est plus le signal de contrôle du compresseur $PWM_{comp}(k)$ mais l'intensité électrique de la vanne du compresseur IVcomp(k). Le fonctionnement des étapes $E_{1'}$, $E_7$, $E_8$ et $E_{10}$ est néanmoins similaire à celui utilisant directement le signal de contrôle.

Concernant les étapes $E_5$ et $E_{11}$, leur fonctionnement va être détaillé par la suite. Il s'agit de travailler sur le point de fonctionnement de la pression minimal du cycle ou encore sur le point de fonctionnement du courant maximal au niveau de la vanne de contrôle du compresseur.

Ainsi que représenté sur la figure 4a, le cycle de fonctionnement de l'unité de contrôle de l'air conditionné 1 considère comme paramètre de consigne le couple maximal admissible $C_{MA}$. Quand, à l'étape $E_4$, le couple estimé $C_{EI}$ est supérieur au couple maximal admissible $C_{MA}$, il est alors nécessaire, dans une sous-étape $E_{53}$, de calculer le courant maximal admissible $IV_M$ en fonction de la pression minimale admissible $P_{RCIm}$. La pression minimale admissible $P_{RCIm}$ est fonction du couple maximal admissible $C_{MA}$ transmis par l'unité de contrôle du moteur 2.

Ensuite, dans une sous-étape $E_{54}$, on vérifie avantageusement que le courant de valve IV(k) est supérieur au courant de valve maximal $IV_M$. Dans l'affirmative, le signal de contrôle sur la valve $IV_{comp}(k)$ commande que le courant $IV_{comp}(k)$ soit maintenu égal au courant maximal admissible $IV_M$ dans une sous-étape $E_{55}$. Dans la négative, le signal de contrôle du courant de valve $IV_{comp}(k)$ est conservé égal au signal précédent IV(k), de façon similaire à ce qui est défini à l'étape $E_8$.

Ainsi que représenté sur la figure 4b, le cycle de fonctionnement de l'unité de contrôle de l'air conditionné 1 considère comme paramètre de consigne le couple cible $C_{CI}$. Quand le couple estimé $C_{EI}$ est trop éloigné du couple cible $C_{CI}$, à une sous-étape $E_{113}$, le point cible de pression basse $P_{RCIC}$ est calculé et sert, dans une sous-étape $E_{114}$, au calcul du courant de valve cible $IV_C$. Le courant de valve cible $IV_C$ est utilisé dans une sous-étape $E_{115}$ pour aligner,

par contrôle PID, le courant de valve $IV_{comp}(k)$ sur la valeur du courant cible $IV_C$.

Dans le deuxième cas, le compresseur peut aussi être contrôlé par l'intermédiaire de la température d'évaporation (ou température d'air soufflé) fournie par la sonde évaporateur.

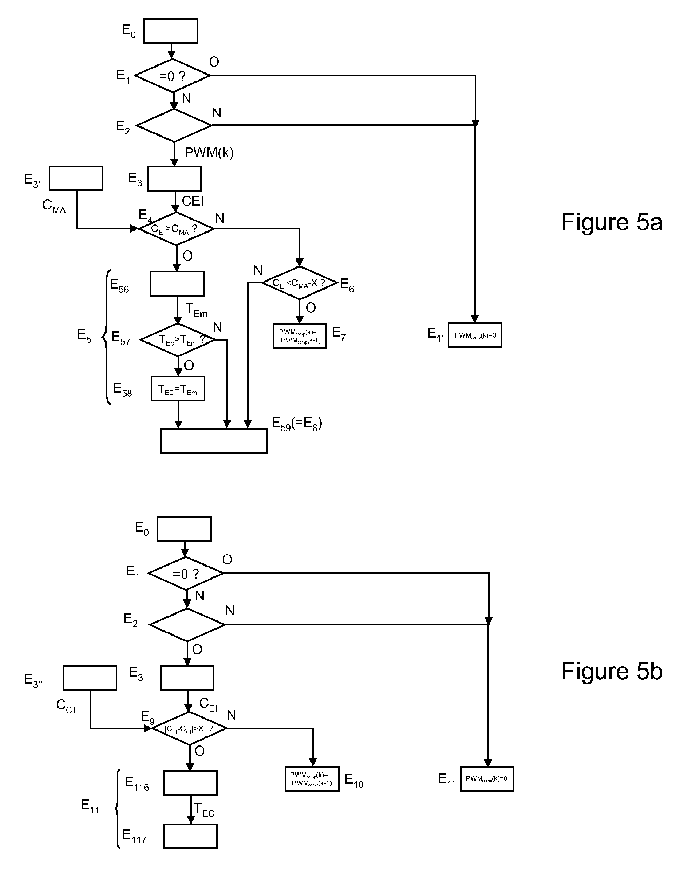

Les figures 5a et 5b illustrent le mode de réalisation dans lequel une température d'évaporation minimale $T_{Em}$ est calculée en fonction du couple maximal admissible $C_{MA}$ dans une sous-étape $E_{56}$. La température minimale $T_{Em}$ est ensuite utilisée dans une sous-étape $E_{57}$ pour la comparer avec la consigne de la température d'évaporation requise $T_{EC}$ par la régulation de l'habitacle.

Si la consigne de la température d'évaporation $T_{EC}$ est supérieure à la température d'évaporation minimale $T_{Em}$, alors une valeur cible de la température d'évaporation notée $T_{EC}$ est égalée à la valeur de la température d'évaporation minimale $T_{Em}$ dans une sous-étape $E_{58}$. Ensuite, à une sous-étape $E_{59}$, le signal de contrôle du compresseur $PWM_{comp}(k)$ est amené par contrôle PID à être contrôlé en fonction de la température de l'air soufflé donnée par la sonde évaporateur.

Si la consigne de la température d'évaporation $T_{EC}$ est inférieure à la température d'évaporation minimale $T_{Em}$ alors, à la sous-étape $E_{59}$, le signal de contrôle du compresseur $PWM_{comp}(k)$ est amené par contrôle PID à être contrôlé en fonction de la température de l'air soufflé donnée par la sonde évaporateur.

De même, lorsque le couple du compresseur observé $C_{EI}$ est proche de la valeur du couple maximal admissible $C_{MA}$, la sous-étape $E_{59}$ amène le compresseur, par contrôle PID, à être contrôlé en fonction de la température de l'air soufflé de la sonde évaporateur.

La figure 5b montre une étape $E_{11}$ utilisant la température d'évaporation $T_{EC}$. Lorsque le couple estimé $C_{EI}$ est trop éloigné du couple cible $C_{CI}$, dans une sous-étape $E_{116}$, une température d'évaporation $T_{EC}$ cible est calculée. Dans une sous-étape $E_{117}$, le compresseur est alors contrôlé par une boucle PID en fonction de la température de l'air soufflé fournie par la sonde évaporateur.

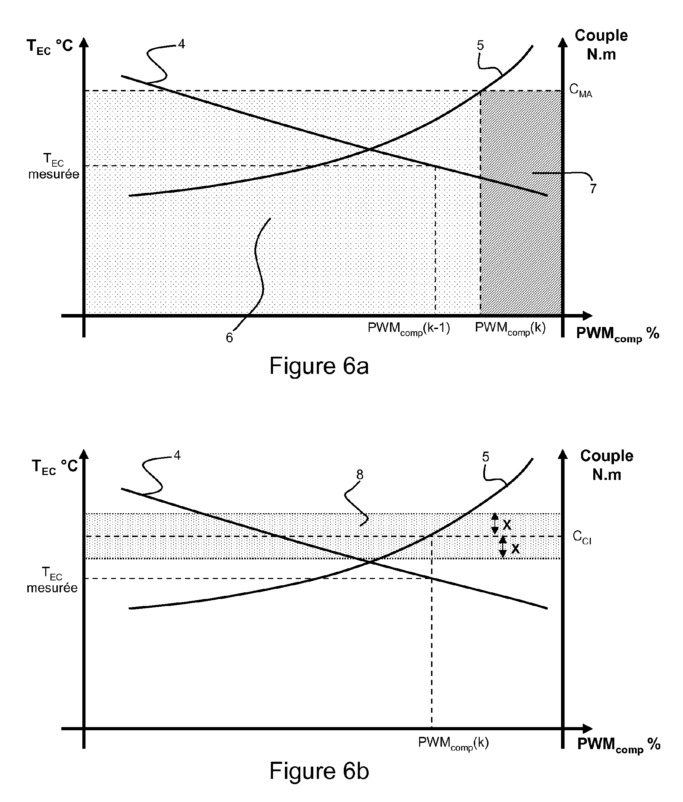

Les figures 6a et 6b représentent des graphes montrant l'évolution du couple estimé, courbe 5, et de la température d'évaporation $T_{EC}$ (ou température d'air soufflé), courbe 4, en fonction du signal de contrôle du compresseur $PWM_{comp}$.

Plus particulièrement, la figure 6a représente graphiquement l'évolution du couple estimé et de la température d'évaporation $T_{EC}$ pour le cycle de fonctionnement de l'unité de contrôle de l'air conditionné dans lequel le type du paramètre de consigne à considérer est le couple maximal admissible $C_{MA}$ et la figure 6b représente graphiquement l'évolution du couple estimé et de la température d'évaporation $T_{EC}$ pour le cycle de fonctionnement de l'unité de contrôle de l'air conditionné dans lequel le type du paramètre de consigne à considérer est le couple cible $C_{CI}$.

Tel que représentées, selon la présente invention est en fonction du paramètre de consigne considéré, on définit une zone de travail, respectivement la zone 6 dans le cas où le couple maximal admissible $C_{MA}$ est le paramètre de consigne considéré, ou la zone 8 dans le cas où le couple cible $C_{CI}$ est le paramètre de consigne considéré,

La présente invention trouve une application particulière dans les installations de chauffage, ventilation et/ou climatisation de véhicules automobiles et plus particulièrement dans les boucles d'air conditionné telles que décrites précédemment.

Bien évidemment, l'invention n'est pas limitée aux modes de réalisation décrits précédemment et fournis uniquement à titre d'exemple. Elle englobe d'autres variantes de réalisation que pourra envisager l'homme du métier dans le cadre de la présente invention. Notamment, la présente invention couvre les dispositifs consistant en des combinaisons des différents modes de réalisation précédemment décrits pris dans leur ensemble ou uniquement en partie.

**Revendications**

1. Procédé de contrôle du fonctionnement d'une boucle d'air conditionné à bord d'un véhicule motorisé, la boucle d'air conditionné comprenant au moins un compresseur couplé au moteur du véhicule, le couplage du compresseur au moteur du véhicule créant une charge sur le moteur dès lors que le compresseur fonctionne, **caractérisé en ce qu'**il comprend

   - une étape d'évaluation ($E_3$) d'un couple instantané du compresseur ($C_{EI}$) appliqué par le compresseur sur le moteur,
   - une étape de comparaison ($E_4$, $E_9$) d'un paramètre de consigne ($C_{MA}$, $C_{CI}$) du compresseur avec l'évaluation du couple instantané du compresseur ($C_{EI}$) et
   - une étape de modification ($E_5$, $E_{11}$) du signal de contrôle du compresseur ($PWM_{comp}(k)$) en comparant le couple effectif du compresseur avec le paramètre de consigne ($C_{MA}$, $C_{CI}$).

2. Procédé selon la revendication 1, **caractérisé en ce que** le moteur est contrôlé par une unité de contrôle du moteur (2) et la boucle d'air conditionné est contrôlée par une unité de contrôle de l'air conditionné (1) et **en ce que** l'unité de contrôle de l'air conditionné (1) est apte à envoyer vers l'unité de contrôle du moteur (2) des données (MA) relatives à la charge appliquée par le compresseur sur le moteur.

3. Procédé selon la revendication 2, **caractérisé en ce que** l'unité de contrôle du moteur (2) est apte à estimer un couple du compresseur ($C_{EI}$) appliqué au moteur à partir des données relatives à la charge, à calculer le paramètre de consigne ($C_{MA}$, $C_{CI}$) et à envoyer le paramètre de consigne ($C_{MA}$, $C_{CI}$) vers l'unité de contrôle de l'air conditionné (1).

4. Procédé selon l'une des revendications précédentes, **caractérisé en ce que** le paramètre de consigne ($C_{MA}$, $C_{CI}$) est une valeur maximale admissible ($C_{MA}$) par le moteur ou une valeur cible ($C_{CI}$).

5. Procédé selon l'une des revendications précédentes, **caractérisé en ce que** le paramètre est choisi parmi un couple, une température d'évaporation ($T_{EC}$), la pression d'aspiration ($P_{RCI}$) du compresseur, la pression de refoulement ($P_{RCO}$) du compresseur, le rapport de pression ($\tau$) entre les pressions d'aspiration ($P_{RCI}$) et de refoulement ($P_{RCO}$) du compresseur, la différence de pression entre les pressions d'aspiration ($P_{RCI}$) et de refoulement ($P_{RCO}$) du compresseur.

6. Procédé selon l'une des revendications précédentes, **caractérisé en ce que** le paramètre de consigne ($C_{MA}$, $C_{CI}$) est calculé en tenant compte d'un signal de contrôle du groupe moto-ventilateur.

7. Unité de contrôle du fonctionnement d'une boucle d'air conditionné (1) à bord d'un véhicule motorisé, la boucle d'air conditionné comprenant au moins un compresseur couplé au moteur du véhicule, le couplage du compresseur au moteur du véhicule créant une charge sur le moteur dès lors que le compresseur fonctionne, **caractérisée en ce que** l'unité de contrôle du fonctionnement de la boucle d'air conditionné (1) est apte à envoyer des données (MA) relatives à la charge appliquée par le compresseur sur le moteur vers une unité de contrôle du moteur (2) et à recevoir des données (MB) relatives à au moins un paramètre de consigne ($C_{MA}$, $C_{CI}$) de fonctionnement du compresseur en provenance de l'unité de contrôle du moteur (2).

8. Unité de contrôle du fonctionnement d'un moteur (2) à bord d'un véhicule motorisé comprenant en outre une boucle d'air conditionné comprenant au moins un compresseur couplé au moteur du véhicule, le couplage du compresseur au moteur du véhicule créant une charge sur le moteur dès lors que le compresseur fonctionne, **caractérisée en ce que** l'unité de contrôle du fonctionnement du moteur (2) est apte à recevoir des données (MA) relatives à la charge appliquée par le compresseur sur le moteur en provenance d'une unité de contrôle du fonctionnement de la boucle d'air conditionné (1), à évaluer la charge instantanée ($C_{EI}$) du compresseur sur le moteur, à calculer un paramètre de consigne ($C_{MA}$, $C_{CI}$) du compresseur en utilisant l'évaluation de la charge instantanée ($C_{EI}$), à envoyer des données (MB) relatives au moins au paramètre de consigne ($C_{MA}$, $C_{CI}$) calculé à l'unité de contrôle de l'air conditionné (1).

9. Système de contrôle du fonctionnement d'une boucle d'air conditionné à bord d'un véhicule motorisé comprenant un compresseur couplé au moteur du véhicule, le couplage du compresseur au moteur du véhicule créant une charge sur le moteur dès lors que le compresseur fonctionne, le système étant apte à mettre en oeuvre le procédé selon l'une des revendications 1 à 6 et comprenant au moins une unité de contrôle de la boucle d'air conditionné (1) selon la revendication 7, une unité de contrôle du moteur (2) selon la revendication 8, un réseau de communication reliant les unités de contrôle de la boucle d'air conditionné (1) et du moteur (2) et permettant l'échange bidirectionnel de messages (MA,MB) entre les unités de la boucle d'air conditionné (1) et du moteur (2).

Figure 1

Figure 2a

Figure 2b

Figure 3a

Figure 3b

Figure 4a

Figure 4b

Figure 5a

Figure 5b

Figure 6a

Figure 6b

Europäisches
Patentamt

European
Patent Office

Office européen
des brevets

## RAPPORT DE RECHERCHE EUROPEENNE

Numéro de la demande

EP 09 16 6684

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 818 198 A (LUK FAHRZEUG HYDRAULIK [DE]) 21 juin 2002 (2002-06-21) * page 4, ligne 25 - page 5, ligne 20; figure 1 * ----- | 1-9 | INV. B60H1/32 |
| X | DE 101 06 243 A1 (BEHR GMBH & CO [DE]) 1 août 2002 (2002-08-01) * alinéas [0020] - [0026]; figure 1 * ----- | 1-9 | |
| A | EP 1 362 727 A (CALSONIC KANSEI CORP [JP]; SUZUKI MOTOR CO [JP]) 19 novembre 2003 (2003-11-19) * colonne 15, ligne 20-38 * ----- | 1,6 | |

**DOMAINES TECHNIQUES RECHERCHES (IPC)**

B60H

Le présent rapport a été établi pour toutes les revendications

| Lieu de la recherche | Date d'achèvement de la recherche | Examinateur |
|---|---|---|
| Munich | 13 novembre 2009 | Gumbel, Andreas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 2 156 972 A1**

**ANNEXE AU RAPPORT DE RECHERCHE EUROPEENNE**
**RELATIF A LA DEMANDE DE BREVET EUROPEEN NO.**

EP 09 16 6684

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-11-2009

| Document brevet cité au rapport de recherche | | Date de publication | Membre(s) de la famille de brevet(s) | | Date de publication |
|---|---|---|---|---|---|
| FR 2818198 | A | 21-06-2002 | AU | 2048302 A | 24-06-2002 |
| | | | WO | 0247929 A1 | 20-06-2002 |
| | | | DE | 10159266 A1 | 25-07-2002 |
| | | | DE | 10197204 D2 | 27-05-2004 |
| | | | IT | MI20012643 A1 | 13-06-2003 |
| | | | JP | 2004514600 T | 20-05-2004 |
| | | | US | 2004003614 A1 | 08-01-2004 |
| DE 10106243 | A1 | 01-08-2002 | EP | 1238837 A1 | 11-09-2002 |
| | | | ES | 2256138 T3 | 16-07-2006 |
| | | | JP | 2002242847 A | 28-08-2002 |
| | | | US | 2002100285 A1 | 01-08-2002 |
| EP 1362727 | A | 19-11-2003 | DE | 60306256 T2 | 09-11-2006 |
| | | | JP | 3959305 B2 | 15-08-2007 |
| | | | JP | 2003326963 A | 19-11-2003 |
| | | | US | 2003233839 A1 | 25-12-2003 |

EPO FORM P0460

Pour tout renseignement concernant cette annexe : voir Journal Officiel de l'Office européen des brevets, No.12/82